# EUROPEAN PATENT SPECIFICATION

(11) **EP 4 158 415 B1**
(45) Date of publication and mention of the grant of the patent: **11.03.2026**
(21) Application number: 21734499.3
(22) Date of filing: 28.05.2021
(51) Int. Cl.: G02B 27/01, G06F 1/16, G06F 3/01, G06F 3/0362, A42B 3/04

(54) **HELMET MOUNTED AUGMENTED REALITY SYSTEM**
HELMMONTIERTES SYSTEM FÜR ERWEITERTE REALITÄT
SYSTÈME DE RÉALITÉ AUGMENTÉE MONTÉ SUR CASQUE

(30) Priority: 29.05.2020 IT 202000012901; 29.05.2020 IT 202000012904
(43) Date of publication of application: 05.04.2023
(73) Proprietor: VRmedia S.r.l., 56121 Ospedaletto (PI) (IT)
(72) Inventor: TECCHIA, Franco, 54100 Massa (IT); CARROZZINO, Marcello, 58100 Grosseto (IT); BACINELLI, Sandro, 54100 Massa (IT); CHERUBINI, Antonello, 56011 Calci (PI) (IT)
(74) Representative: De Milato, Francesco
(86) International application number: PCT/IB2021/054708
(87) International publication number: WO 2021/240468

(56) References cited:
- WO-A2-2013/049248
- JP-A- 2010 268 240
- US-A1- 2015 076 272
- US-A1- 2015 338 659
- US-A1- 2018 180 894
- US-A1- 2019 141 847

## Description

### Field of the invention

The present invention relates to system for representation of augmented reality scenes, in particular a system for representation that is able to display a real scene by a display on which can be, furthermore, displayed supplementary images, for example instructions, annotations, etc.

### Description of the prior art

As is known, a system for augmented reality is a set of hardware and software components that is able to acquire images of a real scene and to display the same on a display adding supplementary images, which are overlapped on the images of the real scene for providing a series of information to a user.

This particular type of technology is more and more widespread in different technical fields that go from mechanics, to electronics, to medicine, with different scopes, in particular in order to train new workers through simulations, or to allow an expert worker positioned in a remote location to guide the actions of a worker in a real scene during some kinds of interventions, for example ordinary, or extraordinary, maintenance interventions.

In the case of use for remote assistance, a system for augmented reality can comprise, at the side of the user, a device for acquiring images of the real scene, normally a digital video camera, and a display, or a display device, on which the images of the real scene are displayed overlapping supplementary images, i.e. a series of virtual images, or annotations, generated by an electronic processor, or by an expert worker placed in a remote location, in particular by an electronic device, in order to provide the aforementioned information to the user. The system for augmented reality, in the case of remote assistance use, comprises, furthermore, at the side of the expert worker positioned in a remote location, a monitor through which the expert worker can follow instant by instant the different actions of the user and guide him/her, for example through a series of annotations.

The system can also comprise an audio unit, i.e. headphones and a microphone, to allow the expert worker and the user to communicate one another also verbally.

This type of technology, therefore, allows also to not professional workers to carry out also complex works both in mechanical and electronic and medical fields, in particular surgical field, as well as in other fields.

The known systems can be classified as "video see through" and "optical see through". The "see through" video systems use video camera to shoot the scene from the worker point of view, overlapping, for example, images, texts, or 3D-graphic, and then show to the worker the same point of view "augmented" by a display. The "optical see through" systems are, instead, constituted by mirrors, or semi-transparent lenses, through which the user sees the real point of view on which are projected in transparency for example images, texts, or 3D-graphycs. The "video see through" systems have in particular the advantage to be easily usable in different environmental light conditions, also with the sun, while the "optical see through" systems have the advantage not to obstruct the natural user field of view.

Another kind of classification of the known systems is made distinguishing between monocular and binocular visors. The monocular visors show the augmented reality only to one eye of the user, while the binocular visors show the same to both the eyes. The monocular visors have for example the advantage to be smaller, lighter and to have a lower battery consumption, the binocular visors have for example the advantage to provide a more comfortable vision.

A further classification of the known systems distinguishes between displays held by hands, "Hand Held Display", or HHD, and displays mounted on the head, "Head Mounted Display", or HMD. The former have in particular the advantage not to strain the neck, the latter to leave the user's hands free and, furthermore, to be able to continuously frame the user field of view, for example for transmitting the same to a worker placed in a remote location.

In some circumstances, especially in the augmented reality field for remote assistance in industrial contexts, some of the aforementioned prior art systems can have many drawbacks.

An "optical see through" system can be low reliable if it is used outdoors, or with high light conditions.

A monocular system is not comfortable in case of a long time work. Then a of HHD type system can hamper the works which require the use of both hands.

Furthermore, the aforementioned known systems cannot be easily adjustable as regards the engagement systems to the head, or the helmet, creating difficulties and unfavourable conditions to the user during the work.

Examples of systems for augmented reality with the aforementioned drawbacks are described in US2018/180894, US2015/338659, US2018/011390 and WO2013/049248.

### Summary of the invention

It is, therefore, an object of the present invention to provide a system for augmented reality that is able to overcome the aforementioned drawbacks of the prior art systems for augmented reality.

It is, in particular, an object of the present invention to provide a system for augmented reality that is able to allow the user to have a binocular view with the hands free and with different light conditions in such a way to be able to comfortably, accurately and reliability work and allowing transmission to an expert worker positioned in a remote location.

It is another object of the present invention to provide a system for augmented reality that is able to assure to firmly engage several components to a helmet worn by a user in working conditions.

It is a further object of the present invention to provide a system for augmented reality that is able to allow a quick assembly and removal of the components of the system on a helmet for augmented reality.

These and other objects are achieved by a system for augmented reality comprising:
- a helmet configured to be worn by a user;
- a container body arranged to house a video unit, said video unit comprising:
   - a device for acquiring images configured to acquire images of a real scene;
   - a display device configured to display at least said images acquired by said device for acquiring images;
- a support body configured to engage said container body a said helmet;
- a transmission unit configured to transmit said images acquired by said device for acquiring images to a remote location;
whose main characteristics is that the container body and the support body are provided with respective first and second engagement members configured to selectively and alternatively removably engage said container body and said support body in a first predetermined engagement position, in which said device for acquiring images is arranged to acquire images of said real scene with a first predetermined field of view FoV1 and said display device is positioned in the field of view of the user, and at least a second predetermined engagement position in which said device for acquiring images is arranged to acquire images of said real scene with a second predetermined field of view FoV2, and said display device is positioned externally to the field of view of the user, and that said transmission unit is arranged to transmit said images of said real scene acquired by said device for acquiring images, to said remote location, also when said container body is positioned in said second predetermined engagement position.

Other features of the invention are described in the dependent claims which define particular embodiments of the present invention.

In particular, the aforementioned container body and the aforementioned support body can comprise respective first and second engagement surfaces provided, respectively, with the aforementioned respective first and second engagement members. More in particular, the aforementioned first and second engagement surfaces can be arranged to selectively and alternatively reversibly engage, by the aforementioned first and second engagement members, to position the aforementioned container body and the aforementioned support body in the first and second predetermined engagement positions.

In particular, the aforementioned first engagement surface and the aforementioned second engagement surface of the container body form an angle α having a predetermined amplitude. More in particular, the aforementioned angle α can be comprised between -10° and 10°, i.e. -10°≤α≤10°, advantageously comprised between -5° and 5°, i.e. -5°≤α≤5°, preferably comprised between 0° and 5°, i.e. 0°≤α≤5°.

Advantageously, the aforementioned first engagement surface and the aforementioned second engagement surface of support body can form an angle β having a determined amplitude.

In particular, the aforementioned angle β can be comprised between -20° and 20°, i.e.: -20°≤β≤20°, advantageously angle β can be comprised between -10° and 10°, i.e.: -10°≤β≤10°, preferably comprised between -5° and 5°, i.e.: -5°≤β≤5°.

Advantageously, the aforementioned support body comprises:
- a base portion arranged to be engaged to the aforementioned helmet;
- a movable portion hinged to the aforementioned base portion, said movable portion being arranged to rotate about a rotation axis with respect to said base portion, in such a way to allow to adjust the inclination of the container body, and in particular the display device that is housed within the same, with respect to the base portion and, therefore, the user, when is engaged to the support body in the first position.

In an advantageous embodiment, at least the aforementioned container body, at least one between the first and the second engagement surface can be provided with a respective guide portion configured to guide the displacement of the container body between the first and the second predetermined engagement position, or vice versa, up to causing the same to engage the aforementioned support body by the first, or second, engagement members.

In particular, the, or each, guide portion can comprise a recessed portion provided, respectively, at the first and second engagement surfaces of the container body and the support body. More in particular, the, or each, recessed portion is configured to house the first, or the second, engagement surface of the support body.

Advantageously, the aforementioned first and second engagement members are configured to magnetically engage the container body and the support body with each other. In particular, the aforementioned first and second engagement members of magnetic type can be configured to carry out a self-centering of the container body and the support body at the first and the second predetermined engagement positions.

In particular, at least the aforementioned second engagement members of the container body and the support body are of magnetic type. More in particular, the aforementioned second engagement members of magnetic type can provide a respective neodymium magnet. In this way, the high magnetic force of this material is able to assure to provide the aforementioned self-centering and, therefore, a correct positioning of the container body with respect to the support body.

Advantageously, the aforementioned first engagement members of the container body and the support body respectively comprise a magnet and at least a portion made of paramagnetic material, in such a way to allow an axial movement between the aforementioned container body and the support body before providing said engagement between said first engagement members at said first predetermined engagement position.

In particular, the first and the second engagement surfaces can be configured in such a way that the first predetermined field of view (FoV1) is equal to, or substantially equal to the second predetermined field of view (FoV2), i.e. FoV1=FoV2, or FoV1≈FoV2.

According to another aspect of the invention a system for augmented reality comprises:
- a helmet configured to be worn by a user, said helmet being provided with an external surface and an internal surface linked by an edge;
- at least a container body arranged to house at least a video device selected from the group comprising:
   - a device for acquiring images configured to acquire images of a real scene;
   - a display device configured to display images of a real scene;
   wherein a tightening group is, furthermore, provided configured to engage said, or each, container body to said helmet, said tightening group comprising:
   - a tightening cable arranged to be constrained to said, or each, container body at a respective constraining portion;
   - a stretching device configured to move from a rest configuration, in which non is arranged to apply a traction force on said tightening cable, ad a stretching configuration, in which is arranged to apply a determined traction force on said tightening cable, in such a way to cause a movement between a positioning configuration, in which said tightening cable is slack and, therefore, can be positioned around said helmet, and a tightening configuration, in which said tightening cable is subject to the aforementioned determined traction force whereby is arranged to tighten said, or each, constraining portion to the aforementioned external surface of the helmet in order to firmly engage the, or each, container body to the helmet, at a respective engagement position.

Advantageously, the aforementioned stretching device can comprise, furthermore, an engagement portion configured to engage the stretching device to the aforementioned edge of the helmet.

In particular, the aforementioned stretching device can comprise a fixed portion, and a movable portion rotatably connected to the fixed portion. More in particular, the aforementioned movable portion can be configured to rotate about a rotation axis with respect to the fixed portion in a first direction of rotation to cause the tightening cable to be wound about a winding shaft, in such a way to apply the aforementioned traction force to the tightening cable, and in a second direction of rotation, opposite to the first one, to unwind the tightening cable from the winding shaft and therefore to reduce the traction force.

In particular, a first engagement body can be furthermore, provided having a first engagement portion configured to engage the aforementioned edge of the helmet. More in particular, first supplementary engagement members can be provided configured to removably engage the fixed portion of the stretching device and the first engagement body and to allow, at the same time, the aforementioned movable portion to rotate with respect to the fixed portion.

Advantageously, the system for augmented reality, according to the invention, can, furthermore, provide:
- a second engagement body associated to the first container body, said second engagement body being provided with a first constraining portion and a second engagement portion configured to engage the second engagement body to the edge of helmet at said first engagement position;
- second engagement members configured to removably engage the second engagement body and the first container body.

In a further embodiment, the system for augmented reality, according to the invention can, furthermore, comprise:
- a third engagement body associated to the second container body, said third engagement body being provided with a second constraining portion and a third engagement portion configured to engage the second container body to the edge of the helmet, at the second position;
- third supplementary engagement members configured to removably engage the second container body and the third engagement body.

Advantageously, said, or each, constraining portion is provided with at least a passageway arranged to cross said, or each, constraining portion between a first and a second side. More in detail, the tightening cable is arranged to be constrained to the, or each, constraining portion at the, or each, passageway.

In particular, at least one among the first, the second and the third engagement portion comprises at least an end portion configured to resiliently move from a closing configuration, to an opening configuration in which is arranged to form an introduction mouth through which the edge of helmet can be introduced at a shaped engagement portion, and then go back to the aforementioned closing configuration, in which is arranged to close, at least partially, said introduction mouth, trapping the edge of helmet into the shaped engagement portion. Advantageously, the shaped engagement portion can be an undercut.

Preferably, the stretching device is provided with an actuation portion configured to actuate the aforementioned movement of said stretching device from said positioning configuration to said stretching configuration.

In a preferred embodiment, the aforementioned container body is, furthermore, arranged to house a transmission unit operatively connected to said video unit. More in particular, the transmission unit is configured to transmit said images of said real scene acquired by said device for acquiring images to a remote location and to receive supplementary images generated by said remote location.

In particular, the aforementioned supplementary images are arranged to be displayed on the display device together with, or alternatively to, the aforementioned images acquired by the device for acquiring images.

### Brief description of the drawings

The invention will now be shown with the following description of its exemplary embodiments, exemplifying but not limitative, with reference to the attached drawings in which:
- Fig. 1A diagrammatically shows a side elevation view of a first embodiment of a system, according to the invention, for augmented reality;
- Fig. 1B diagrammatically shows a side elevation view of a first alternative embodiment of the system for augmented reality of figure 1A;
- Fig. 2 diagrammatically shows a side elevation view of the video unit of the system according to the invention in the first predetermined engagement position;
- Fig. 3 diagrammatically shows a side elevation view of video unit of the system according to the invention in the second predetermined engagement position;
- Fig. 4 diagrammatically shows the functioning of the system for augmented reality according to the invention, when the video unit is positioned in the first predetermined engagement position;
- Fig. 5 diagrammatically shows the functioning of the system for augmented reality according to the invention, when the video unit is positioned in the second predetermined engagement position;
- Fig. 6 diagrammatically shows a side elevation view of a possible embodiment of the system according to the invention, in the first predetermined engagement position;
- Fig. 7 diagrammatically shows a side elevation view of another possible embodiment of the system according to the invention, in the first predetermined engagement position;
- the figures 8 and 9 diagrammatically show, respectively, a perspective view from the above, and a perspective view from below, of an embodiment provided for the container body of the video unit of the system according to the invention;
- Fig. 10 diagrammatically shows a side elevation perspective view of a possible embodiment of the system, according to the invention, for augmented reality;
- Fig. 11 shows a possible scheme of functioning alternative to that one of figure 4 of the system, according to the invention, for augmented reality;
- Fig. 12 shows a plan view of the system for augmented reality in a rest configuration;
- Fig. 13 shows a side elevation view of the actuation of the stretching device by a user for applying a traction force on the tightening cable of the system of figure 12;
- Fig. 14 shows a plan view of the system for augmented reality of figure 12 in the stretching configuration;
- Figures 15 and 16 show side elevation perspective view of the stretching device, respectively disengaged from and engaged with the first engagement body;
- Fig. 17A diagrammatically shows a perspective view from the above of the second engagement body provided by the invention;
- Fig. 17B diagrammatically shows side elevation perspective view of the movement of the end portion of the engagement portion from a closing configuration to an opening configuration and vice versa;

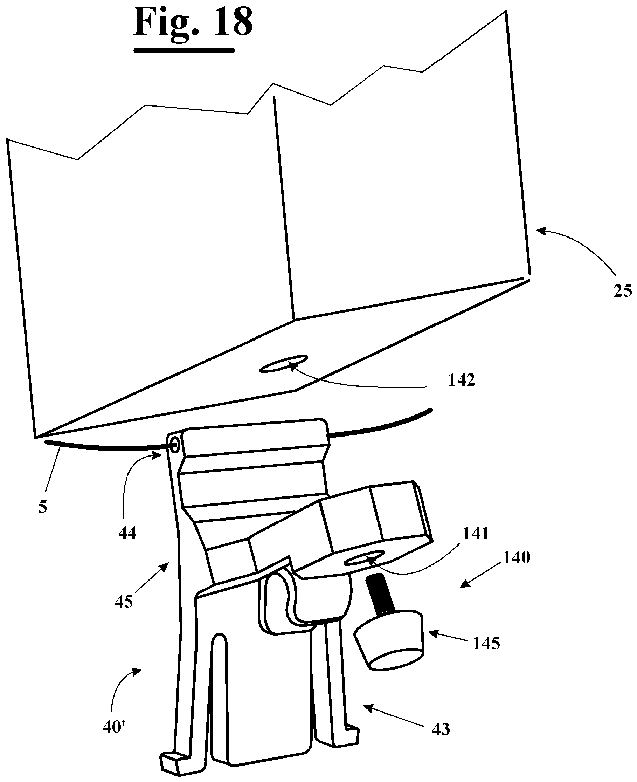

- Fig. 18 diagrammatically shows a side elevation perspective view of the third engagement body according to the invention;
- Figures 19 and 20 diagrammatically show, respectively, side elevation perspective views of further embodiments of the hook member foreseen by the system for augmented reality according to the present invention.

### Detailed description of some exemplary embodiments of the invention

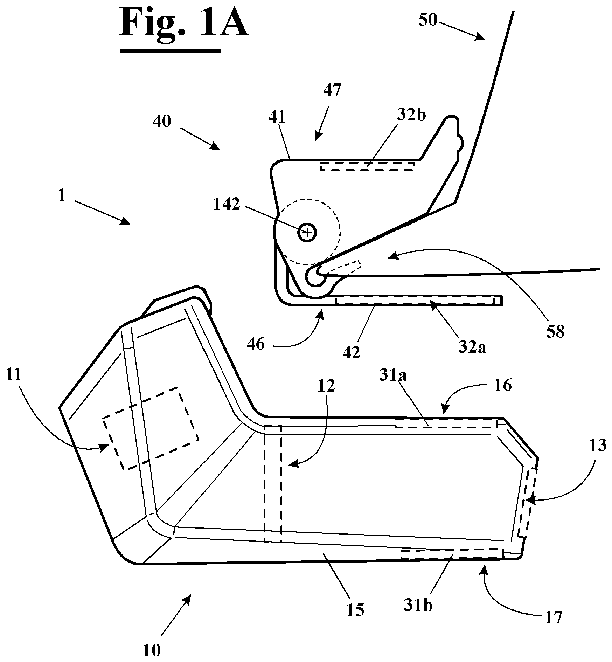

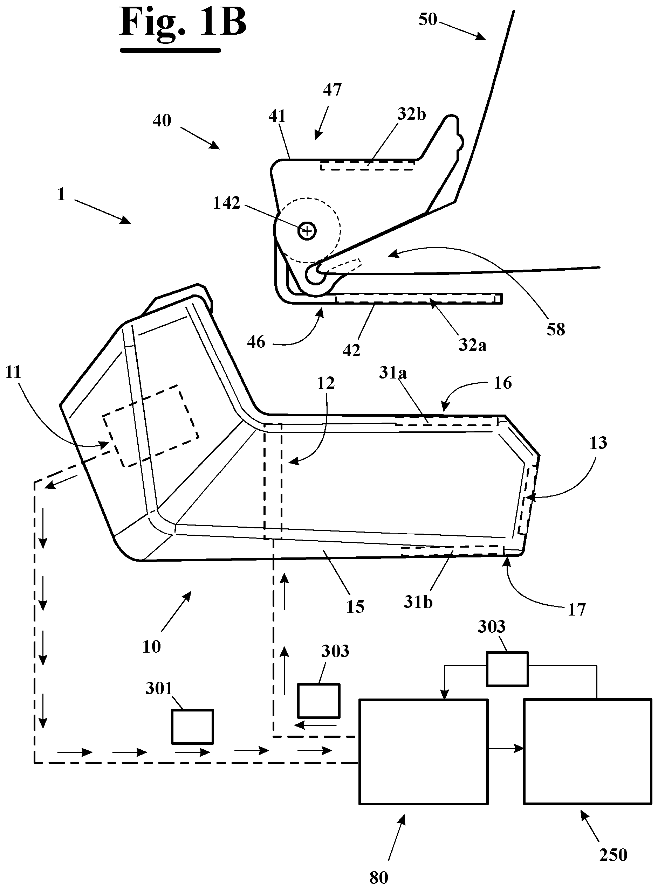

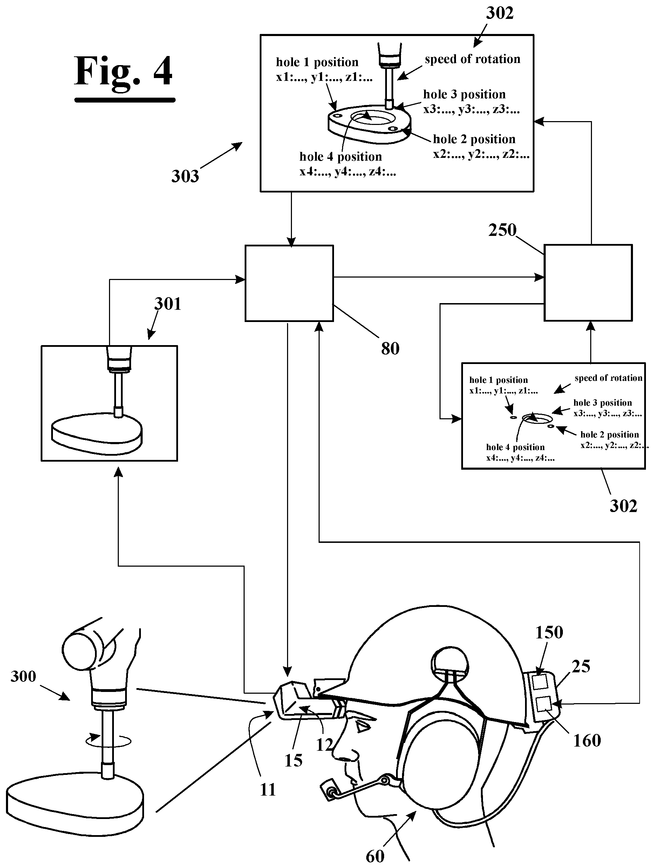

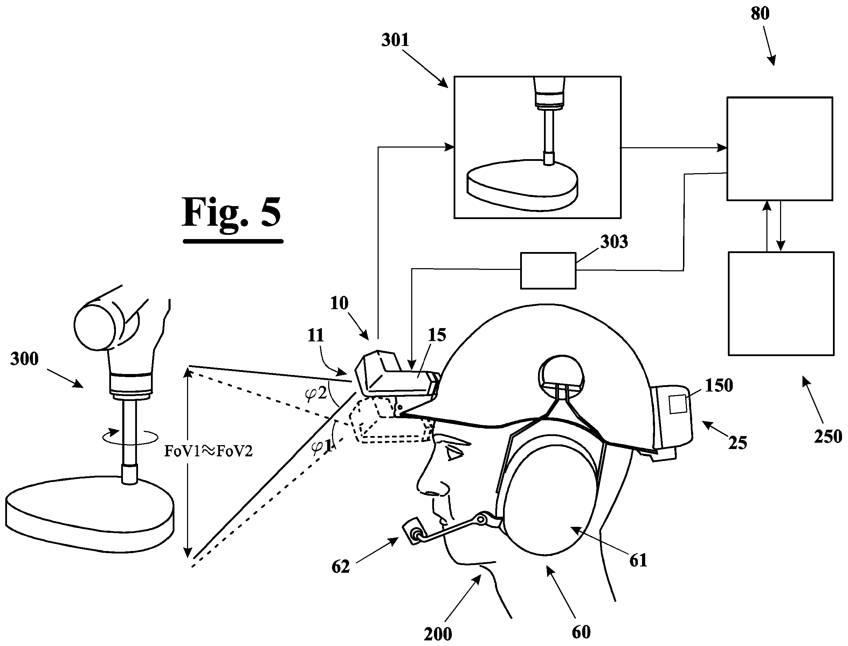

As diagrammatically shown in figure 1A, a system 1, according to the invention, for augmented reality comprises a helmet, or head armor, 50 configured to be worn by a user 200 (see figures 4 and 5), a container body 15 arranged to house a video unit 10. This can provide a device for acquiring images 11, in particular a digital video camera, configured to acquire the images 301 of a real scene 300, and/or a display device 12 configured to display at least the aforementioned images 301 acquired by the device for acquiring images 11. In the preferred embodiment shown for example in figure 1, the video unit 10 comprises both the device for acquiring images 11 and the display device 12. More in detail, the container body 15 can be provided with only one lens 13, and, therefore, be a monocular visor. Preferably, the container body 15 of system 1 is provided with a first and a second lens 13 and, therefore, is a binocular visor. Through the, or each, lens 13 the user 200 can watch the display device 12 installed within the container body 15. The system 1, furthermore, comprises a support body 40 configured to engage the container body 15 to the helmet 50, preferably at the front edge 58 of the same. According to the invention, the container body 15 and the support body 40 are provided with respective first engagement members 31a, 32a, and second engagement members 31b, 32b configured to selectively and alternatively removably engage the container body 15 to the support body 40 in a first predetermined engagement position, in which the device for acquiring images 11 is arranged to acquire images of the real scene 300 with a first predetermined viewing angle φ1, and the display device 12 is positioned in the field of view of the user 200, and at least a second predetermined engagement position, in which the device for acquiring images 11 is arranged to acquire images 301 of the real scene 300 with a second predetermined viewing angle φ2 and the display device 12 is positioned outside of the field of view of the user 200. The first and the second predetermined engagement positions are, advantageously, predetermined positions in which the container body 15 can be positioned with respect to the support body 40. In this way, the user 200 is, in particular, able to reach the container body 15 without looking away from the real scene 300 to bring the same back from the second position to the first position.

In particular, the first and the second engagement members 31a, 32a, 31b, 32b can be configured to move from the first predetermined engagement position to the second predetermined engagement position, or vice versa, passing through an intermediate engagement position in which the container body 15 is mechanically disengaged from the support body 40.

In a preferred embodiment of the invention, diagrammatically shown in figure 1B, the system 1 comprises, preferably, also a transmission unit 80, for example housed within the container body 15, operatively connected to the video unit 10 and configured to send the aforementioned images 301 of the real scene 300 acquired by the device for acquiring images 11 to a remote location 250. In particular, at the remote location 250 can be, advantageously, positioned an expert worker who guides, by the system 1, the actions of user 200 who wears the helmet 50. More in particular, when the container body 15 is positioned in the second predetermined engagement position, the device for acquiring images 11 is advantageously arranged to acquire images 301 of the real scene 300. More in particular, the acquired images 301 are, then, transmitted by the transmission unit 80 to the remote location 250 in such a way that the actions of the user are, anyway, monitored and/or recorded in order to verify that they are correct.

In particular, the transmission unit 80, for example comprising a WIFI card, can be, furthermore, configured to receive a series of supplementary images 302, for example virtual images, or annotations, which can be displayed on the display device 12 together with, or alternatively to, the aforementioned images 301 of the real scene 300. In particular, the aforementioned supplementary images 302 can be generated by the expert worker, for example by a PC, a tablet, or another electronic device, and sent, for example via internet to the transmission unit 80. The supplementary images 302 can be, therefore, processed, for example, to be decoded, by a local processing unit that is not shown for reasons of simplicity, provided on board of the helmet 50, in order to be, then, displayed on display device 12.

In particular, if on the display device 12 are displayed at the same time both the images 301 and the supplementary images 302, for example superimposed on one another, complex images 303 are obtained. In a possible alternative embodiment of the invention, the remote location 250 can be configured to generate the aforementioned supplementary images 302, or directly the complex images 303 comprising the aforementioned images 302 and the aforementioned images 301, for example superimposed on one another, and to send them to the transmission unit 80.

In particular, the aforementioned supplementary images 302, can comprise contents as for example written instructions, or annotations, can be displayed on the aforementioned display device 12 to guide the user 200 who is wearing the helmet 50, during some works, both in mechanical field, for example to assembly together the parts of a machine, and in electric field, for example during an ordinary, or extraordinary maintenance intervention, on an electronic control unit, but also in surgical field to carry out an operation, etc.

According to an alternative embodiment, the aforementioned supplementary images 302 can be generate from a local processing unit, not shown for reasons of simplicity, for example, housed within the container body 15.

In an embodiment of the invention, diagrammatically shown in figure 5, a second container body 25 can be provided, for example engaged to the helmet 50 at a rear portion, within which at least a supply unit 150 can be housed, for example comprising at least a battery, preferably a rechargeable battery, arranged to supply electric power to the video unit 10 and to the transmission unit 80. Advantageously, in the aforementioned intermediate engagement position, the video unit 10 is operatively connected, for example by cable, not shown in the figure for simplicity reasons, to the aforementioned supply unit 150.

In particular, the second container body 25 can be engaged to helmet 50 by a supplementary support body 40' provided with an engagement portion configured to engage the helmet 50 and with the engagement members for engaging the supplementary support body 50', not shown in the figure for reasons of simplicity.

The system 1, according to the invention, can advantageously comprise, furthermore, an audio unit 60, preferably engaged to the aforementioned helmet 50, for example in a lateral position 51 and comprising, in particular an audio transmission device 61, as for example a microphone, and an audio receiving device 62.

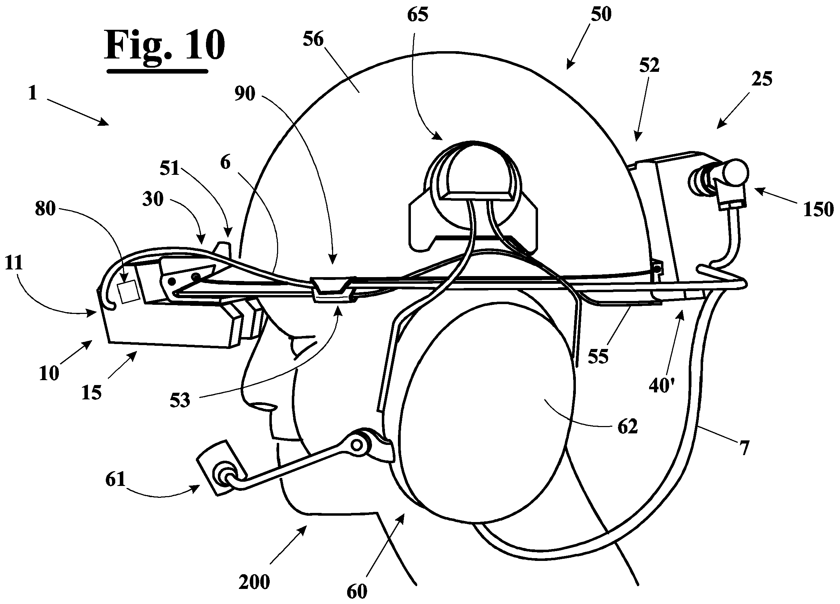

More in particular, as diagrammatically shown in figure 4, the audio unit 60 can be connected to the supply unit 150, and to a respective audio transmission unit 160, for example housed within the second container body 25, in such a way that the user 200 can also verbally communicate with the expert worker positioned in the aforementioned remote location 250. In particular, at least one between the video unit 10 and the audio unit 60 can be connected to the respective transmission unit 80 and 160 by a wireless connection, for example, by Bluetooth connection, or WIFI connection. As diagrammatically shown in figure 10, furthermore, the video unit 10 and the audio unit 60 can be connected to the supply unit 150 by respective wires 6 and 7.

In a preferred embodiment, the container body 15 and the support body 40 comprise respective first and second engagement surfaces 16, 17, and 46, 47, respectively, provided with the aforementioned respective first and second engagement members 31a, 32a, and 31b, 32b. More in detail, the first and the second engagement surfaces 16, 17, 46, and 47 are arranged to selectively and alternatively removably engage, by the aforementioned first and second engagement members 31a, 32a, and 31b, 32b, to move the container body 15 in the first, or the second predetermined engagement position, with respect to the aforementioned support body 40.

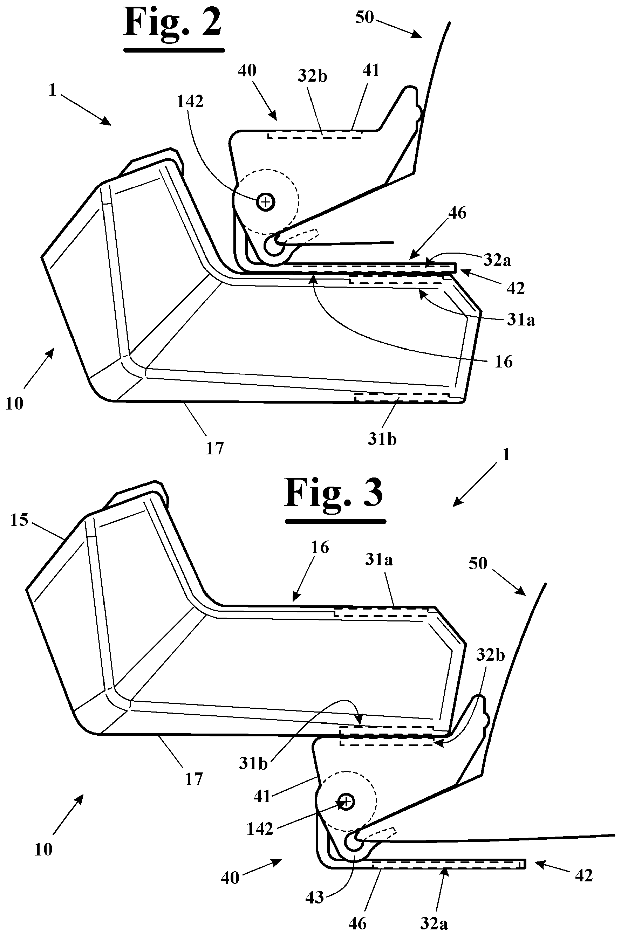

In an embodiment of the invention, diagrammatically shown for example in figure 3, the support body 40 comprises a base portion 41 configured to be engaged to the helmet 50, and a movable portion 42 hinged to the base portion 41. More in particular, the movable portion 42 is arranged to rotate about a rotation axis 142 with respect to the base portion 41, in order to allow the user to adjust the inclination of the container body 15 and, in particular, of the display device 12, with respect to the base portion 41, when the video unit 10 is engaged to the support body 40 in the first position. In particular, the aforementioned movable portion 42 can be hinged to the aforementioned base portion 41 by a constant friction hinge. More in particular, in this way the rotation of the movable portion 42 with respect to the base portion 41 can be adjusted in such a way that the angle which is formed between them does not exceed a predetermined range of values, for example comprised between 10° and 70°, preferably comprised between 20° and 60°.

More in detail, the support body 40 comprises an engagement portion 43 configured to engage the base portion 41 of the support body 40 to the helmet 50, in particular at the front edge 58. For example, the engagement portion 43 can provide one or more shaped portions, for example curved, such as one, or more clip portions, able to deform in a controlled way in order to engage the edge of the aforementioned front edge 58.

Preferably, the first and the second engagement members 31a, 32a, 31b, 32b are configured to provide a magnetic engagement between the container body 15 and the support body 40.

In particular, at least the second engagement members 31b and 32b of magnetic type of the container body 15 and the support body 40 provide a respective neodymium magnet. This particular solution allows to provide a self-centering of the two magnets 32a, and 32b with respect to each other and, therefore, a correct positioning of the container body 15 with respect to the support body 40 in the second position, owing to the high magnetic force that this kind of material is able to exert.

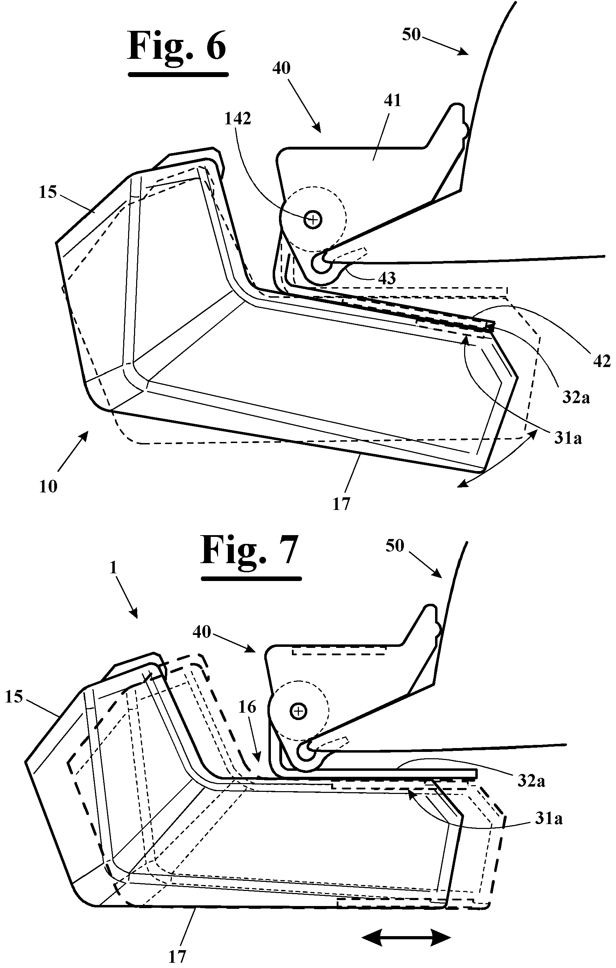

In a possible embodiment of the invention, diagrammatically shown in figure 7, the first engagement members 31a and 32a of the container body 15 and the support body 40 comprise, respectively, a magnet 31a, for example a neodymium magnet, and at least a portion made of paramagnetic material 32a. In this way, the magnetic force applied between the two parts allows to carry out a movement, in particular an axial movement, between the container body 15 and the support body 40, before carrying out the aforementioned engagement between the same by the first engagement members 31a and 32a, at the first predetermined engagement position. This solution allows, therefore, to the user 200 to adjust the distance of the video unit 10.

In a preferred embodiment, the aforementioned first and second engagement surfaces 16, 17, 46 and 47 and/or the first and the second engagement members 31a, 32a, 31b, 32b, can be configured in such a way that the field of view FoV1 of the device for acquiring images 11 in the first predetermined engagement position, is, advantageously, substantially equal to the field of view Fov2 of the device for acquiring images 11 in the second predetermined engagement position (see figure 5).

In this way, expert worker point of view at the remote location does not change according to the changing of the predetermined engagement position between the container body 15 and the support body 40.

As diagrammatically shown for example in the figures 2 and 3, the first engagement surface 16 and the second engagement surface 17 of the container body 15 can be substantially parallel to each other. Advantageously, also the first engagement surface 46 and the second engagement surface 47 of the support body 40 are substantially parallel to each other.

More in detail, the aforementioned first engagement surface 16 and the aforementioned second engagement surface 17 of the container body 15 can be slightly inclined one with respect to the other, in such a way to form an angle α comprised between -10° and 10°, i.e. -10°≤α≤10°, advantageously comprised between -5° and 5°, i.e. -5°≤α≤5°, preferably comprised between 0° and 5°, i.e. 0°≤α≤5°. Analogously, the aforementioned first engagement surface 46 and the aforementioned second engagement surface 47 of the support body 40 can form an angle β of predetermined amplitude. In particular, the aforementioned angle β can be comprised between -20° and 20°, i.e.: -20°≤β≤20°, advantageously the angle β can be comprised between -10° and 10°, i.e.: -10°≤β≤10°, preferably comprised between -5° and 5° i.e.: -5°≤β≤5°.

Generally, the geometry of the container body 15 and the support body 40 are such to keep the field of view FoV of the device for acquiring images 11 substantially unchanged between the first and the second predetermined engagement position. In this way, in the second predetermined engagement position the user 200 can directly look at the real scene 300 to work more precisely on the mechanical, or electrical, parts or of any other type, while the expert worker positioned at the remote location can have the same field of view of the real scene 300 avoiding to lose the reference points.

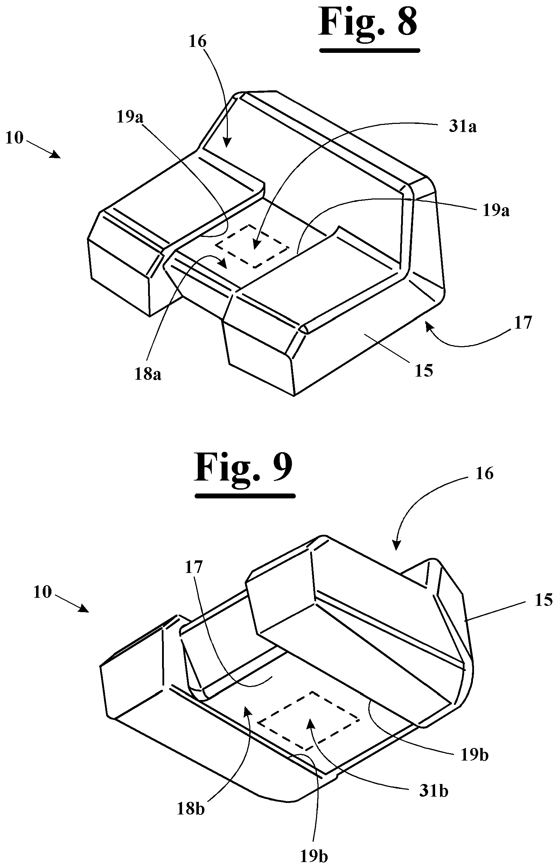

In particular, as shown in detail in the embodiment diagrammatically shown in the figures 8 and 9, at least one between the container body 15 and the support body 40, at least one of the aforementioned engagement surfaces 16, or 17, or 46, or 47, can be provided with a guide portion 18, or 48. More in particular, the, or each, guide portion 18a, or 48a, is configured to guide the engagement of the container body 15 with the support body 40, in the first, or in the second, position. In a preferred embodiment, at least one between the container body 15 and the support body 40, at both the aforementioned engagement surfaces 16 and 17, or 46 and 47, can be provided with a guide portion 18a and 18b, or 48a and 48b. For example, the, or each, guide portion 18a, or 18b, or 48a, or 48b, can provide a recessed portion, in particular grooved, or a protruding portion. More precisely, the, or each guide portion 18a, or 18b, can be laterally delimited by walls 19a and 19b arranged to guide the correct positioning of the container body 15 with respect to the support body 40 up to the engagement of the same in the first, or the second engagement position by first, or second, engagement members 31a, 31b, 32a, 32b. In an embodiment of the invention, at least the size of one between the first and the second engagement surfaces 46 and/or 47 of the support body 40 can be chosen in such a way to have a width substantially equal to the width of the aforementioned guide portion 18a, or 18b, of the first and/or the second engagement surface 16 and/or 17 of the container body 15. In this case, the correct positioning of the container body 15 with respect to the support body 40 in the first and/or in the second engagement position, is caused both by the magnetic force exerted by magnets 31a, 31b and 32a, 32b and by the, or each, guide portion 18a, or 18b.

The system 1 can, furthermore, provide a detection group, not shown in figure, comprising one, or more sensors, in particular at least a position sensor and/or an accelerometer, in case, in addition to a GPS unit, for determining the position and the spatial orientation of the user 200 with respect to the real scene 300 acquired by the device for acquiring images 11.

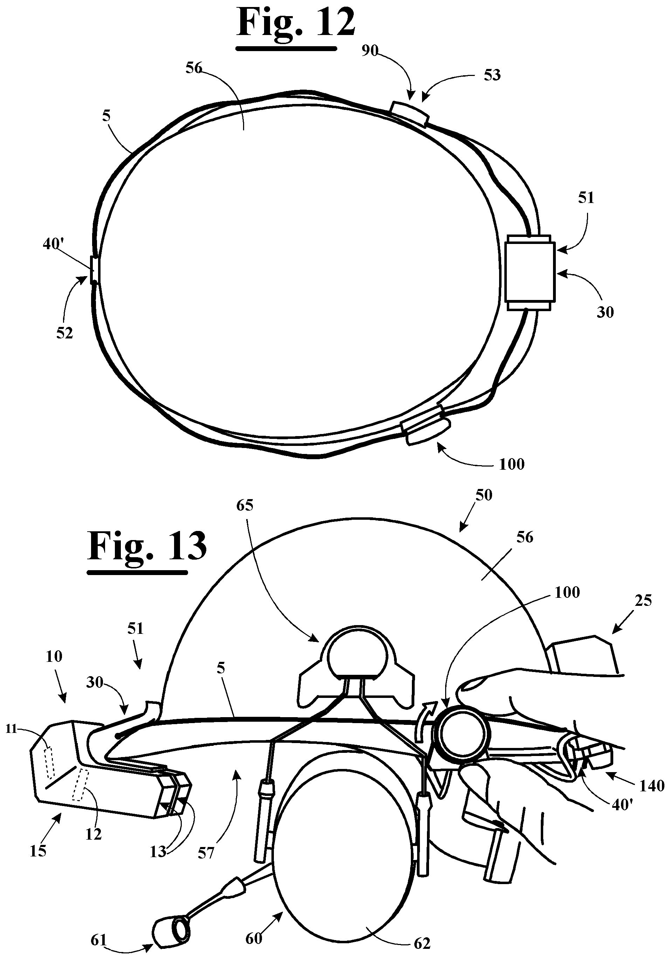

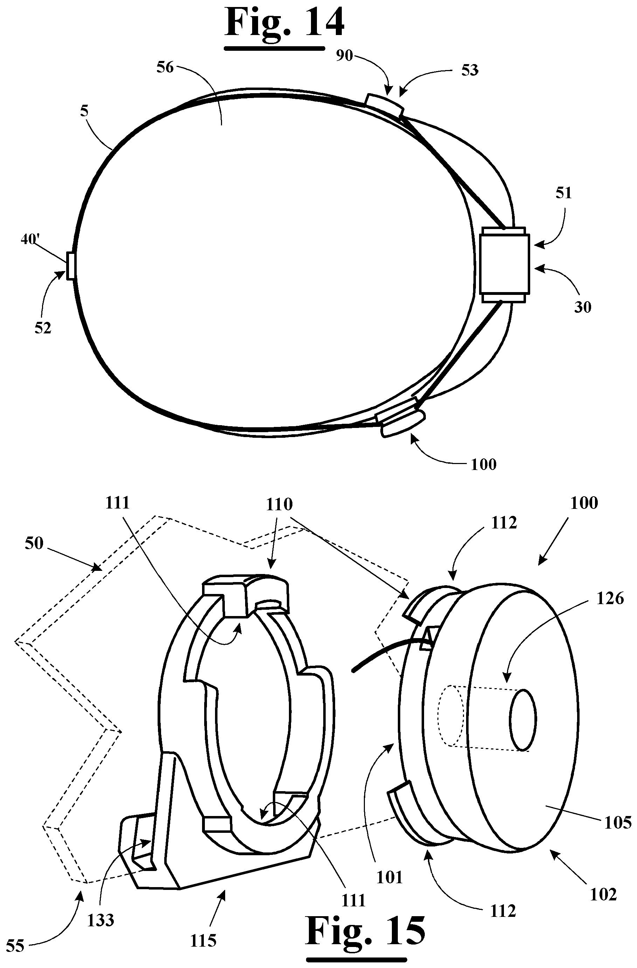

As diagrammatically shown in the figures from 10 to 20, the system 1, according to the invention, can comprise, furthermore, a tightening group 70 configured to engage the, or each, container body 15, and/or 25, to helmet 50, in particular at an edge 55. More in particular, the edge 55 can have a thickness greater than the other parts of helmet 50, and have, for example, a curvilinear section. In particular, the tightening group 70 can provide a tightening cable 5 arranged to engage the, or each, container body 15 at a respective constraining portion 35. The tightening group 70 can, furthermore, comprise a stretching device 100 configured to apply a determined traction force to the tightening cable 5. More precisely, the stretching device 100 can be arranged to move, preferably gradually, from a rest configuration, in which is not arranged to apply a traction force to the tightening cable 5, or to apply a low traction force, to a stretching configuration, in which the stretching device 100 is arranged to apply a determined traction force to the tightening cable 5. In this way, the stretching device 100 is arranged to cause the tightening cable 5 to move, preferably gradually, between a positioning configuration, in which the tightening cable 5 is slack and is, therefore, possible to position the same around the helmet 50 (see figure 12), and a tightening configuration, in which the tightening cable 5 is subject to the aforementioned determined traction force and is arranged to tighten the, or each, constraining portion 35 to the external surface 56 of helmet 50 in order to firmly engage the, or each, container body 15 and/or 25 to the helmet 50 (see figure 14).

Advantageously, the stretching device 100, according to the present invention, can comprise a blocking member arranged to avoid that, when the tightening device 100 is positioned in the aforementioned stretching configuration, can accidentally go back to the rest configuration, reducing, even to zero, the aforementioned traction force on the tightening cable 5. Therefore, the stretching device 100 is configured in such a way to be blocked by itself in the stretching configuration.

In particular, the stretching device 100 which can be used by the system 1, according to the present invention, can be structurally similar to the stretching devices described in US2008/0066346, US2015/0230560, or US2015/0076272 used in the field of shoes with different purposes with respect to the present invention.

In the case that is diagrammatically shown as an example in the figures from 10 to 14, the system 1 provides a first and a second container body 15 and 25. More in detail, the first container body 15 can be arranged to house both the device for acquiring images 11 arranged to acquire the images 301 of the real scene 300, and the display device 12 arranged to display the aforementioned images 301. The second container body 25 can be arranged to house the supply unit 150 configured to supply electric power to the device for acquiring images 11 and to the display device 12. In particular, the first container body 15 is provided with a first engagement portion 35, and the second container body 25 is provided with a second engagement portion 45. More precisely, the first container body 15 is tightened to the helmet 50 at a first engagement position 51, preferably the front portion of the helmet 50, while the second container body 25 is tightened to the helmet 50 at a second engagement position 52, preferably the rear position of the helmet 50.

As diagrammatically shown in figure 13, the actuation of the stretching device 100 in order to subject the tightening cable 5 to the aforementioned traction force can be caused by acting on an actuation portion 105, for example an actuation knob.

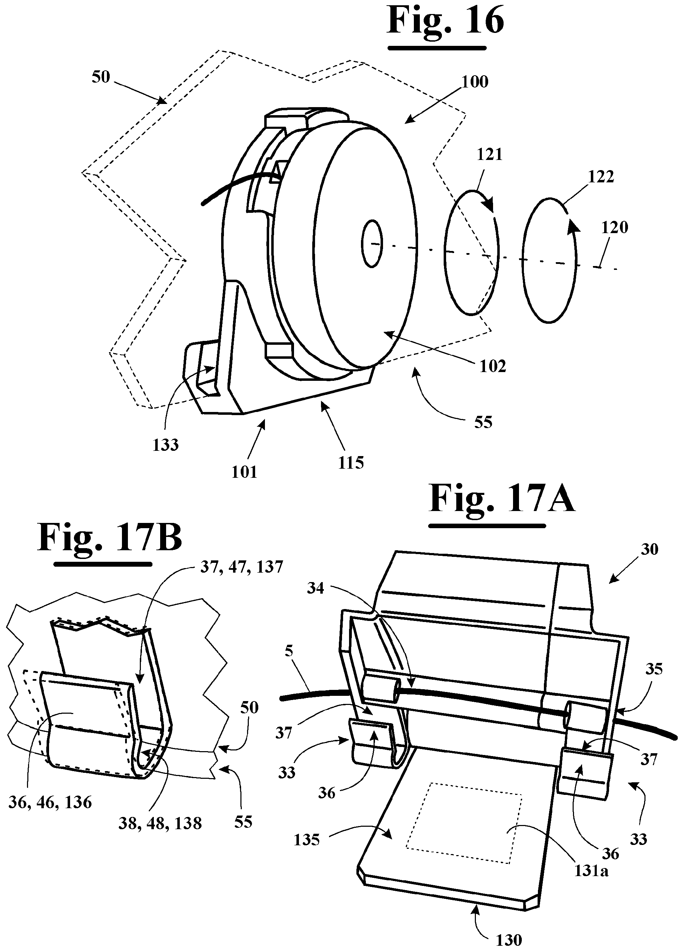

In a preferred embodiment of the invention, the stretching device 100 can comprise a fixed portion 101 engaged to the helmet 50, and a movable portion 102 rotatably connected to the fixed portion. More in detail, as diagrammatically shown in the figures 15 and 16, the movable portion 102 can be configured to rotate around a rotation axis 120 with respect to the fixed portion 101, in a first direction of rotation 121 to cause the tightening cable 5 to be wound around a winding shaft 126 in such a way to apply the aforementioned traction force on the tightening cable 5, or in a second direction of rotation 122, opposite to the first, to unwind the tightening cable 5 from the aforementioned winding shaft 126 and to reduce, in this way, the traction force up to reaching the aforementioned positioning configuration in which the tightening cable 5 is slack. In a foreseen embodiment, the aforementioned stretching device 100 can be associated to a first engagement body 115. The aforementioned rotation of the movable portion 102 with respect to the fixed portion 101 can be obtained by acting on the aforementioned actuation portion 105, for example an actuation knob. More in detail, the first engagement body 115 can be provided with a first engagement portion 133 configured to engage the edge 55 of helmet 50, shown in transparency in figure 15, for example forming an undercut. The first engagement body 115 and the stretching device 100 can be provided with first supplementary engagement members 110 configured to removably engage the aforementioned fixed portion 101 of the stretching device 100 and the first engagement body 115. More in particular, the first supplementary engagement members 110 are configured in such a way to allow the movable portion 102 to rotate with respect to the fixed portion 101. In the embodiment diagrammatically shown in the figures 15 and 16, the first supplementary engagement members 110 comprise first engagement walls 111 at the engagement body 115 and second engagement walls 112 at the fixed portion 101. As described above, the engagement walls 111 and 112 are configured to engage the fixed portion 101 to the first engagement body 115 and, therefore, to the helmet 50, and, anyway, to allow the movable portion 102 to rotate about the rotation axis 120.

As diagrammatically shown in figure 17A, a second engagement body 30 can be provided associated to container body 15. More in detail, the second engagement body 30 can be provided with the aforementioned constraining portion 35 and with a second engagement portion 33 configured to engage the second engagement body 30 to the edge 55 of helmet 50, in particular at the first engagement position 51. In particular, second supplementary engagement members 130 are, furthermore, provided configured to removably engage the container body 15 and the second engagement body 30.

In the example that is diagrammatically shown in figure 17A, the second supplementary engagement members 130 comprise a second engagement member 131a at the second engagement body 30, for example at a fixing protruding portion 135 of the same, arranged to engage the engagement member 31a (see figure 8) of container body 15. In a preferred embodiment, at least one between the engagement member 131a and the engagement member 31a is a magnet, preferably a neodymium magnet, and the other engagement member 31a, or 131a, is an element made of a paramagnetic material. In an alternative embodiment of the invention, the first and the second engagement member 31a and 131a are two magnets, for example two neodymium magnets.

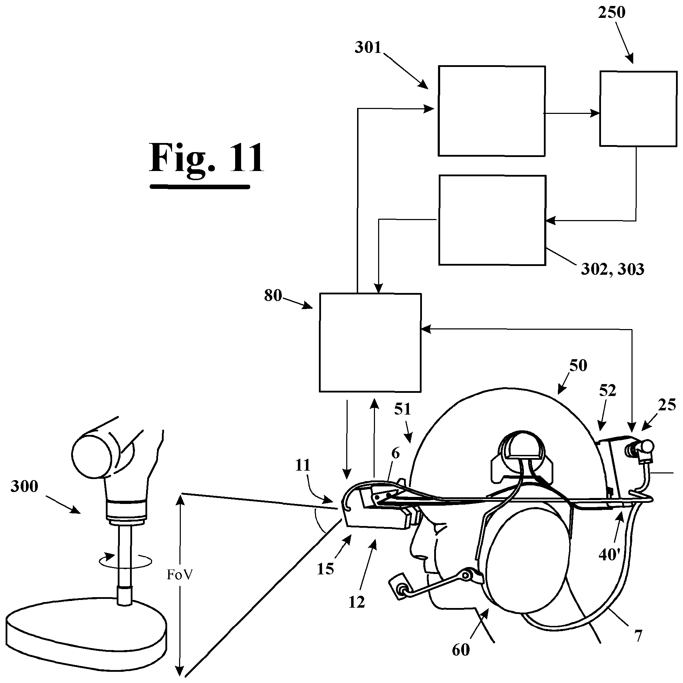

As shown in figure 11, in an embodiment provided by the invention, the system 1 can, furthermore, provide a third engagement body 40' associated to the second container body 25. The third engagement body 40' can be provided with the second constraining portion 45 and a third engagement portion 43 configured to engage the edge 55 of helmet 50. In particular, third supplementary engagement members 140 can be furthermore provided configured to removably engage the second container body 25 and the third engagement body 40'. For example, the third supplementary engagement members 140 can provide a first engagement hole 141 at a fixing portion 145 of the third engagement body 40, a second engagement hole 142 at the second container body 25 and an elongated member 145 arranged to engage in the first and in the second engagement hole 141 and 142. In particular, the first and the second engagement hole 141 and 142 and the elongated member 145 can be threaded in such a way to provide a threaded coupling. In particular, in the examples of figures 9 and 11, the first and the second constraining portion 35 and 45, respectively, of the second and the third engagement body 30 and 40', are provided with respective passageways 34 and 44. In particular, each passageway 34, or 44, is arranged to cross the first, or the second, constraining portion 35, or 45, between a first and a second side. More in particular, the aforementioned tightening cable 5 is arranged to be constrained to the first, or the second, constraining portion 35, or 45, at the aforementioned passageway 34, or 44.

In the embodiment shown as an example in the figures 17A and 17B, the engagement body 30 comprises at least a second engagement portion 33. More in particular, the, or each, second engagement portion 33 comprises a respective end portion 36 configured to resiliently move from a closing configuration (indicated in figure 17B with an unbroken line) to an opening configuration (indicated in figure 17B with a broken line) in which forms a respective introduction mouth 37. More precisely, through the aforementioned introduction mouth 37, the edge 55 of helmet 50 can be positioned at a respective shaped engagement portion 38, for example forming an undercut. Then, the, or each, end portion 36, that is not anymore subjected to the force that has caused the aforementioned elastic deformation, is arranged to go back in the aforementioned closing configuration, in which closes, at least partially, the respective introduction mouth 38, practically, trapping the edge 55 of helmet 50 in the shaped engagement portion 38.

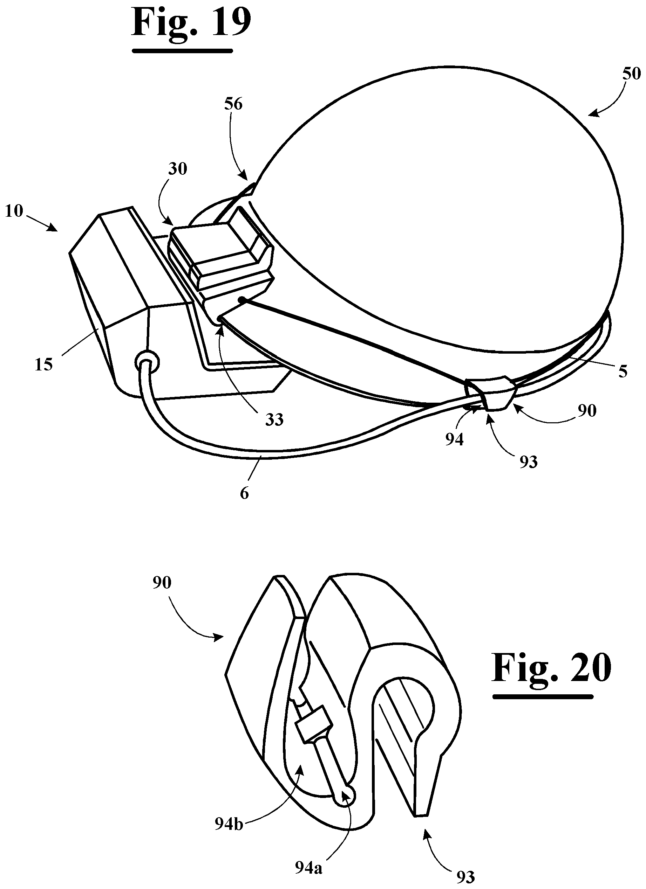

As diagrammatically shown in the figures 19 and 20, the tightening group according to the invention can, furthermore, comprise at least a hook member 90 arranged to engage the edge 55 of helmet 50 at least a portion of the aforementioned tightening cable 5 at a third engagement position 53, in particular interposed between the first and the second engagement position 51 and 52. In the example of figure 12 and 13, the hook member 90 is configured to engage the helmet 50, in addition to the tightening cable 5, also to the connection cable 6 arranged to connect the, or each, audio device 11, or 12, to the supply unit 150. According to an embodiment that is not shown in the figures, the, or each, hook member 90 can be arranged to engage the helmet 50 only at connection cable 6.

In this way, it is possible to avoid that portions of the tightening cable and/or the connection cable 6 can be free to dangle along the respective trajectory around the helmet 50. More precisely, the hook member 90 can be provided with a respective engagement portion 93 arranged to engage the edge 55 of helmet 50, for example having the characteristics described above with reference to figure 9B for the secondo engagement body 30. Furthermore, as diagrammatically shown in figure 20, the hook member 90 can be provided with a first passageway 94a arranged to house, in use, the tightening cable 5, and a second passageway 94b arranged to house, in use, the aforementioned connection cable 6.

According to an embodiment of the invention, the second container body 25 in addition to the supply unit 150, can be arranged to house a sound card, and/or a video card, not shown for simplicity reasons, respectively connected to the audio unit 60 and to the, or each, video device 11, or 12.

The system 1 can, furthermore, provide a detection group, not shown in figure, comprising one, or more sensors, in particular at least a position sensor and/or an accelerometer, in addition to a possible GPS unit, for determining the position and the spatial orientation of the user 200 with respect to the real scene 300 acquired by the device for acquiring images 11.

The foregoing description exemplary embodiments of the invention will so fully reveal the invention according to the conceptual point of view, so that others, by applying current knowledge, will be able to modify and/or adapt for various applications such embodiment without further research and without parting from the invention, and, accordingly, it is therefore to be understood that such adaptations and modifications will have to be considered as equivalent to the specific embodiments. The means and the materials to realize the different functions described herein could have a different nature without, for this reason, departing from the field of the invention. It is to be understood that the phraseology or terminology that is employed herein is for the purpose of description and not of limitation.

## Claims

1. A system (1) for augmented reality comprising:
- a helmet (50) configured to be worn by a user (200);
- a container body (15) arranged to house a video unit (10), said video unit (10) comprising:
- a device for acquiring images (11) configured to acquire images (301) of a real scene (300);
- a display device (12) configured to display at least said images (301) of said real scene (300) acquired by said device for acquiring images (11);
- a support body (40) configured to engage said container body (15) to said helmet (50);
- a transmission unit (80) configured to transmit said images (301) acquired by said device for acquiring images (11) to a remote location (250);
said system (1) being **characterized in that** said container body (15) and said support body (40) are provided with respective first and second engagement members (31a, 32a, 31b, 32b) configured to selectively and alternatively removably engage said container body (15) to said support body (40) in a first predetermined engagement position, in which said device for acquiring images (11) is arranged to acquire images (301) of said real scene (300) with a first predetermined field of view (FoV1) and said display device (12) is positioned in the field of view of the user, and at least a second predetermined engagement position, in which said device for acquiring images (11) is arranged to acquire images (301) of said real scene (300) with a second predetermined field of view (FoV2), and said display device (12) is positioned externally to the field of view of the user **and in that** said transmission unit (80) is arranged to transmit said images of said real scene (300) acquired by said device for acquiring images (11), to said remote location also when said container body (15) is positioned in said second predetermined engagement position.

2. System for augmented reality, according to claim 1, wherein said container body (15) and said support body (40) comprise respective first and second engagement surfaces (16, 46, 17, 47) respectively provided with said respective first and second engagement members (31a, 32a, 31b, 32b), said first and second engagement surfaces (16, 46, 17, 47) being arranged to selectively and alternatively reversibly engage with each other, by said first and second engagement members (31a, 32a, 31b, 32b) to position said container body (15) in said first, or in said second, predetermined engagement position with respect to said support body (40).

3. System for augmented reality, according to claim 2, wherein said first engagement surface (16) and said second engagement surface (17) of said container body (15) form an angle α of predetermined amplitude, said angle α being comprised between -10° and 10°, i.e.: - 10°≤α≤10°.

4. System for augmented reality, according to claim 1, wherein said support body (40) comprises:
- a base portion (41) arranged to be engaged to said helmet (50);
- a movable portion (42) hinged a said base portion (41), said movable portion (42) being configured to rotate about a rotation axis (142) with respect to said base portion (41), in such a way to allow to adjust the inclination of container body (15) with respect to the base portion and, therefore, with respect the user, when said container body (15) is arranged to engage said support body (40) in said first predetermined engagement position.

5. System for augmented reality, according to claim 2, wherein at least said container body (15), at said respective first and second engagement surfaces (16, 17) is, furthermore, provided with respective guide portions (18a, 18b, 19a, 19b) configured to guide the positioning of said container body (15) with respect to said support body (40), up to engaging said first, or second, engagement member (31a,32a,31b,32b), said, or each, guide portion (18a, 18b) comprising a recessed portion provided at least in one between said first and second engagement surfaces of said container body (15), said, or each, recessed portion being configured to house said first, or said second, engagement surface (46, 47) of said support body (40).

6. System for augmented reality, according to any one of the previous claims, wherein said first and second engagement members (31a, 32a, 31b, 32b) are configured to magnetically engage said container body (15) and said support body (40) with each other, and wherein at least said second engagement members (31b, 32b) of said container body (15) and said support body (40) are of magnetic type and comprise a respective neodymium magnet, in such a way to provide a self-centering of said second engagement members (31b, 32b) owing to the high magnetic force and, therefore, a correct positioning of said container body (15) with respect to said support body (40).

7. System for augmented reality, according to claim 1, wherein said first engagement members (31a, 32a) of said container body (15) and said support body (40) comprise, respectively, a magnet (31a) and at least a portion made of a paramagnetic material (32a), in such a way to allow an axial movement between said container body (15) and said support body (40) before engaging said first engagement members (31a, 32a) with each other at said first predetermined engagement position.

8. System for augmented reality, according to any one of the previous claims, wherein said first and second engagement surfaces (16, 17, 46, 47) are configured in such a way that said first predetermined field of view (FoV1) is substantially equal to said second predetermined field of view (FoV2).

9. System for augmented reality, according to any one of the previous claims, wherein a tightening group (70) is, furthermore, provided configured to engage said, or each, container body (15, 25) to said helmet (50).

10. System for augmented reality, according to claim 9, wherein said tightening group (70) comprises:
- a tightening cable (5) arranged to be constrained to said, or each, container body (15, 25) at a respective constraining portion (35, 45);
- a stretching device (100) configured to move from a rest configuration, in which said stretching device (100) is not arranged to apply a traction force on said tightening cable (5), to a stretching configuration, in which said stretching device (100) is arranged to apply a determined traction force on said tightening cable (5), in such a way to cause said tightening cable to move from a positioning configuration, in which said tightening cable (5) is slack and can be, therefore, positioned around said helmet (50), and a tightening configuration, in which said tightening cable (5) is subject to said determined traction force whereby said tightening cable (5) is arranged to tighten said, or each, constraining portion (35, 45) to said external surface (56) of said helmet (50) to firmly engage said, or each, container body (15) to said helmet (50), at a respective predetermined engagement position;
wherein said stretching device (100) comprises a fixed portion (101) arranged to engage said helmet (50) and a movable portion (102) rotatably connected to said fixed portion, said movable portion (102) being configured to rotate about a rotation axis (120) with respect to said fixed portion (101) in a first direction of rotation to cause said tightening cable (5) to be wound around a winding shaft (126) in such a way to apply said traction force on said tightening cable (5), and in a second direction of rotation, opposite to the first, to unwind said tightening cable (5) from said winding shaft (126) and to reduce said traction force, and wherein are, furthermore, provided:
- a first engagement body (115) having a first engagement portion (133) configured to engage said edge (55) of said helmet (50);
- first supplementary engagement members (110) are provided configured to removably engage said fixed portion (101) of said stretching device (100) and said first engagement body (115), said first supplementary engagement members (110) being configured in such a way to allow said movable portion (102) to rotate with respect to said fixed portion (101)a second engagement body (30) associated to said first container body (15), said second engagement body (30) being provided with a first constraining portion (35) and a second engagement portion (33) configured to engage said second engagement body (30) a said edge (55) of said helmet (50) at said first predetermined engagement position (51);
- second supplementary engagement members (130) configured to removably engage said first container body (15) and said second engagement body (30);
- a third engagement body (40') associated to said second container body (25), said third engagement body (40') being provided with said second constraining portion (45) and a third engagement portion (43) configured to engage said second container body (25) a said edge (55) of said helmet (50) at said second position (52);
- third supplementary engagement members (140) configured to removably engage said second container body (25) and said third engagement body (40').

11. System for augmented reality, according to claim 10, wherein said, or each, constraining portion (35, 45) is provided with at least a passageway (34, 44) configured to pass through said, or each, constraining portion (35, 45) between a first and a second side, said tightening cable (5) being arranged to be constrained to said, or each, constraining portion at said, or each, passageway (34, 44).

12. System for augmented reality, according to claim 10 or 11, wherein said stretching device (100) is provided with an actuation portion (105) configured to cause said movable portion (102) to rotate with respect to said fixed portion (101) in said first, or second, direction of rotation.

13. System for augmented reality, according to claim 11, wherein at least one among said first, second and third engagement portion (133,33,43) comprises at least an end portion (36) configured to resiliently move from a closing configuration, to an opening configuration in which said end portion (36) is arranged to form an introduction mouth (37) through which said edge (55) is arranged to be introduced at a shaped engagement portion (38), and then to go back in said closing configuration, in which said end portion (36) is arranged to close, at least partially, said introduction mouth (37), trapping said edge (55) into said shaped engagement portion (38), and wherein said shaped engagement portion (38) is an undercut.

14. System for augmented reality according to any one of the previous claims, wherein said first and said second engagement members (31a,32a,31b,32b) are configured to move from said first predetermined engagement position to said second predetermined engagement position, or vice versa, passing through an intermediate engagement position, in which said container body (15) is mechanically disengaged from said support body (40).

15. System for augmented reality, according to any one of the previous claims wherein is, furthermore, provided a second container body (25) arranged to house a supply unit (150) operatively connected to at least one between said device for acquiring images (11) and said images display device (12) to supply electric power.

## Patentansprüche

1. System (1) für erweiterte Realität, umfassend:
- einen Helm (50), der dazu konfiguriert ist, durch einen Benutzer (200) getragen zu werden;
- einen Behälterkörper (15), der dazu angeordnet ist, eine Videoeinheit (10) aufzunehmen, wobei die Videoeinheit (10) Folgendes umfasst:
- eine Vorrichtung zum Erfassen von Bildern (11), die dazu konfiguriert ist, Bilder (301) einer realen Szene (300) zu erfassen;
- eine Anzeigevorrichtung (12), die dazu konfiguriert ist, zumindest die Bilder (301) der realen Szene (300) anzuzeigen, die durch die Vorrichtung zum Erfassen von Bildern (11) erfasst werden;
- einen Stützkörper (40), der dazu konfiguriert ist, den Behälterkörper (15) an dem Helm (50) in Eingriff zu nehmen;
- eine Übertragungseinheit (80), die dazu konfiguriert ist, die Bilder (301), die durch die Vorrichtung zum Erfassen von Bildern (11) erfasst werden, an eine entfernte Stelle (250) zu übertragen;
wobei das System (1) **dadurch gekennzeichnet ist, dass** der Behälterkörper (15) und der Stützkörper (40) mit jeweiligen ersten und zweiten Eingriffselementen (31a, 32a, 31b, 32b) bereitgestellt sind, die dazu konfiguriert sind, den Behälterkörper (15) selektiv und alternativ entfernbar an dem Stützkörper (40) in einer ersten vorbestimmten Eingriffsposition, in der die Vorrichtung zum Erfassen von Bildern (11) dazu angeordnet ist, Bilder (301) der realen Szene (300) mit einem ersten vorbestimmten Sichtfeld (FoV1) zu erfassen, und die Anzeigevorrichtung (12) in dem Sichtfeld des Benutzers positioniert ist, und zumindest einer zweiten vorbestimmten Eingriffsposition, in der die Vorrichtung zum Erfassen von Bildern (11) dazu angeordnet ist, Bilder (301) der realen Szene (300) mit einem zweiten vorbestimmten Sichtfeld (FoV2) zu erfassen, und die Anzeigevorrichtung (12) außerhalb des Sichtfeldes des Benutzers positioniert ist, in Eingriff zu nehmen, **und dass** die Übertragungseinheit (80) dazu angeordnet ist, die Bilder der realen Szene (300), die durch die Vorrichtung zum Erfassen von Bildern (11) erfasst werden, auch an die entfernte Stelle zu übertragen, wenn der Behälterkörper (15) in der zweiten vorbestimmten Eingriffsposition positioniert ist.

2. System für erweiterte Realität nach Anspruch 1, wobei der Behälterkörper (15) und der Stützkörper (40) jeweilige erste und zweite Eingriffsflächen (16, 46, 17, 47) umfassen, die jeweils mit den jeweiligen ersten und zweiten Eingriffselementen (31a, 32a, 31b, 32b) bereitgestellt sind, wobei die ersten und zweiten Eingriffsflächen (16, 46, 17, 47) dazu angeordnet sind, selektiv und alternativ reversibel miteinander durch die ersten und zweiten Eingriffselemente (31a, 32a, 31b, 32b) einzugreifen, um den Behälterkörper (15) in der ersten oder in der zweiten vorbestimmten Eingriffsposition in Bezug auf den Stützkörper (40) zu positionieren.

3. System für erweiterte Realität nach Anspruch 2, wobei die erste Eingriffsfläche (16) und die zweite Eingriffsfläche (17) des Behälterkörpers (15) einen Winkel α von vorbestimmter Amplitude bilden, wobei der Winkel α zwischen -10 ° und 10 ° umfasst ist, d. h.: - 10 °≤α≤10 °.

4. System für erweiterte Realität nach Anspruch 1, wobei der Stützkörper (40) Folgendes umfasst:
- einen Basisabschnitt (41), der dazu angeordnet ist, an dem Helm (50) in Eingriff genommen zu sein;
- einen bewegbaren Abschnitt (42), der an den Basisabschnitt (41) angelenkt ist, wobei der bewegbare Abschnitt (42) dazu konfiguriert ist, sich um eine Drehachse (142) in Bezug auf den Basisabschnitt (41) auf eine solche Weise zu drehen, um zu ermöglichen, die Neigung des Behälterkörpers (15) in Bezug auf den Basisabschnitt und somit in Bezug auf den Benutzer einzustellen, wenn der Behälterkörper (15) dazu angeordnet ist, den Stützkörper (40) in der ersten vorbestimmten Eingriffsposition in Eingriff zu nehmen.

5. System für erweiterte Realität nach Anspruch 2, wobei zumindest der Behälterkörper (15) an den jeweiligen ersten und zweiten Eingriffsflächen (16, 17) ferner noch mit jeweiligen Führungsabschnitten (18a, 18b, 19a, 19b) bereitgestellt ist, die dazu konfiguriert sind, die Positionierung des Behälterkörpers (15) in Bezug auf den Stützkörper (40) bis zum Eingreifen in das erste oder zweite Eingriffselement (31a, 32a, 31b, 32b) zu führen, wobei der oder jeder Führungsabschnitt (18a, 18b) einen vertieften Abschnitt umfasst, der zumindest in einer zwischen den ersten und zweiten Eingriffsflächen des Behälterkörpers (15) bereitgestellt ist, wobei der oder jeder vertiefte Abschnitt dazu konfiguriert ist, die erste oder die zweite Eingriffsfläche (46, 47) des Stützkörpers (40) aufzunehmen.

6. System für erweiterte Realität nach einem der vorhergehenden Ansprüche, wobei die ersten und zweiten Eingriffselemente (31a, 32a, 31b, 32b) dazu konfiguriert sind, den Behälterkörper (15) und den Stützkörper (40) magnetisch miteinander in Eingriff zu nehmen, und wobei zumindest die zweiten Eingriffselemente (31b, 32b) des Behälterkörpers (15) und des Stützkörpers (40) vom magnetischen Typ sind und einen jeweiligen Neodymmagneten umfassen, auf eine solche Weise, um eine Selbstzentrierung der zweiten Eingriffselemente (31b, 32b) aufgrund der hohen Magnetkraft und somit eine korrekte Positionierung des Behälterkörpers (15) in Bezug auf den Stützkörper (40) bereitzustellen.

7. System für erweiterte Realität nach Anspruch 1, wobei die ersten Eingriffselemente (31a, 32a) des Behälterkörpers (15) und des Stützkörpers (40) jeweils einen Magneten (31a) und zumindest einen Abschnitt gefertigt aus einem paramagnetischen Material (32a) umfassen, auf eine solche Weise, um eine axiale Bewegung zwischen dem Behälterkörper (15) und dem Stützkörper (40) zu ermöglichen, bevor die ersten Eingriffselemente (31a, 32a) in der ersten vorbestimmten Eingriffsposition miteinander in Eingriff genommen werden.

8. System für erweiterte Realität nach einem der vorhergehenden Ansprüche, wobei die ersten und zweiten Eingriffsflächen (16, 17, 46, 47) auf eine solche Weise konfiguriert sind, dass das erste vorbestimmte Sichtfeld (FoV1) im Wesentlichen gleich dem zweiten vorbestimmten Sichtfeld (FoV2) ist.

9. System für erweiterte Realität nach einem der vorhergehenden Ansprüche, wobei eine Spanngruppe (70) ferner noch bereitgestellt ist, die dazu konfiguriert ist, den oder jeden Behälterkörper (15, 25) an dem Helm (50) in Eingriff zu nehmen.

10. System für erweiterte Realität nach Anspruch 9, wobei die Spanngruppe (70) Folgendes umfasst:
- ein Spannkabel (5), das dazu angeordnet ist, an dem oder jedem Behälterkörper (15, 25) an einem jeweiligen Beschränkungsabschnitt (35, 45) beschränkt zu sein;
- eine Streckvorrichtung (100), die dazu konfiguriert ist, sich von einer Ruhekonfiguration, in der die Streckvorrichtung (100) nicht dazu angeordnet ist, eine Zugkraft auf das Spannkabel (5) auszuüben, zu einer Streckkonfiguration, in der die Streckvorrichtung (100) dazu angeordnet ist, eine bestimmte Zugkraft auf das Spannkabel (5) auszuüben, zu bewegen, auf eine solche Weise, um zu bewirken, dass sich das Spannkabel von einer Positionierungskonfiguration, in der das Spannkabel (5) locker ist und daher um den Helm (50) positioniert sein kann, und einer Spannkonfiguration bewegt, in der das Spannkabel (5) der bestimmten Zugkraft ausgesetzt ist, wodurch das Spannkabel (5) dazu angeordnet ist, den oder jeden Beschränkungsabschnitt (35, 45) an der Außenfläche (56) des Helms (50) zu spannen, um den oder jeden Behälterkörper (15) an dem Helm (50) in einer jeweiligen vorbestimmten Eingriffsposition fest in Eingriff zu nehmen;
wobei die Streckvorrichtung (100) einen festen Abschnitt (101), der dazu angeordnet ist, den Helm (50) in Eingriff zu nehmen, und einen bewegbaren Abschnitt (102), der drehbar mit dem festen Abschnitt verbunden ist, umfasst, wobei der bewegbare Abschnitt (102) dazu konfiguriert ist, sich um eine Drehachse (120) in Bezug auf den festen Abschnitt (101) in einer ersten Drehrichtung zu drehen, um zu bewirken, dass das Spannkabel (5) um eine Wickelwelle (126) auf eine solche Weise gewickelt wird, um die Zugkraft auf das Spannkabel (5) auszuüben, und in einer zweiten Drehrichtung entgegengesetzt zu der ersten, um das Spannkabel (5) von der Wickelwelle (126) abzuwickeln und um die Zugkraft zu reduzieren, und wobei ferner noch Folgendes bereitgestellt ist:
- ein erster Eingriffskörper (115) mit einem ersten Eingriffsabschnitt (133), der dazu konfiguriert ist, die Kante (55) des Helms (50) in Eingriff zu nehmen;
- erste ergänzende Eingriffselemente (110) bereitgestellt sind, die dazu konfiguriert sind, den festen Abschnitt (101) der Streckvorrichtung (100) und den ersten Eingriffskörper (115) entfernbar in Eingriff zu nehmen, wobei die ersten ergänzenden Eingriffselemente (110) auf eine solche Weise konfiguriert sind, um zu ermöglichen, dass sich der bewegbare Abschnitt (102) in Bezug auf den festen Abschnitt (101) dreht, ein zweiter Eingriffskörper (30) assoziiert mit dem ersten Behälterkörper (15), wobei der zweite Eingriffskörper (30) mit einem ersten Beschränkungsabschnitt (35) und einem zweiten Eingriffsabschnitt (33) bereitgestellt ist, der dazu konfiguriert ist, den zweiten Eingriffskörper (30) an der Kante (55) des Helms (50) in der ersten vorbestimmten Eingriffsposition (51) in Eingriff zu nehmen;
- zweite zusätzliche Eingriffselemente (130), die dazu konfiguriert sind, den ersten Behälterkörper (15) und den zweiten Eingriffskörper (30) entfernbar in Eingriff zu nehmen;
- ein dritter Eingriffskörper (40') assoziiert mit dem zweiten Behälterkörper (25), wobei der dritte Eingriffskörper (40') mit dem zweiten Beschränkungsabschnitt (45) und einem dritten Eingriffsabschnitt (43) bereitgestellt ist, der dazu konfiguriert ist, den zweiten Behälterkörper (25) an der Kante (55) des Helms (50) an der zweiten Position (52) in Eingriff zu nehmen;
- dritte zusätzliche Eingriffselemente (140), die dazu konfiguriert sind, den zweiten Behälterkörper (25) und den dritten Eingriffskörper (40') entfernbar in Eingriff zu nehmen.

11. System für erweiterte Realität nach Anspruch 10, wobei der oder jeder Beschränkungsabschnitt (35, 45) mit zumindest einem Durchgang (34, 44) bereitgestellt ist, der dazu konfiguriert ist, durch den oder jeden Beschränkungsabschnitt (35, 45) zwischen einer ersten und einer zweiten Seite zu verlaufen, wobei das Spannkabel (5) dazu angeordnet ist, an dem oder jedem Beschränkungsabschnitt an dem oder jedem Durchgang (34, 44) beschränkt zu sein.

12. System für erweiterte Realität nach Anspruch 10 oder 11, wobei die Streckvorrichtung (100) mit einem Betätigungsabschnitt (105) bereitgestellt ist, der dazu konfiguriert ist, zu bewirken, dass sich der bewegbare Abschnitt (102) in Bezug auf den festen Abschnitt (101) in die erste oder zweite Drehrichtung dreht.

13. System für erweiterte Realität nach Anspruch 11, wobei zumindest einer von dem ersten, zweiten und dritten Eingriffsabschnitt (133, 33, 43) zumindest einen Endabschnitt (36) umfasst, der dazu konfiguriert ist, sich elastisch von einer Schließkonfiguration zu einer Öffnungskonfiguration zu bewegen, in welcher der Endabschnitt (36) dazu angeordnet ist, eine Einführmündung (37) zu bilden, durch welche die Kante (55) angeordnet ist, an einem geformten Eingriffsabschnitt (38) eingeführt zu werden, und dann zurück in die Schließkonfiguration zu gehen, in welcher der Endabschnitt (36) dazu angeordnet ist, die Einführmündung (37) zumindest teilweise zu schließen, wodurch die Kante (55) in dem geformten Eingriffsabschnitt (38) eingeschlossen wird, und wobei der geformte Eingriffsabschnitt (38) eine Hinterschneidung ist.

14. System für erweiterte Realität nach einem der vorhergehenden Ansprüche, wobei die ersten und zweiten Eingriffselemente (31a, 32a, 31b, 32b) dazu konfiguriert sind, sich von der ersten vorbestimmten Eingriffsposition zu der zweiten vorbestimmten Eingriffsposition oder umgekehrt verlaufend durch eine Zwischeneingriffsposition zu bewegen, in welcher der Behälterkörper (15) mechanisch außer Eingriff mit dem Stützkörper (40) ist.

15. System für erweiterte Realität nach einem der vorhergehenden Ansprüche, wobei ferner noch ein zweiter Behälterkörper (25) bereitgestellt ist, der dazu angeordnet ist, eine Zufuhreinheit (150) aufzunehmen, die mit zumindest einer zwischen der Vorrichtung zum Erfassen von Bildern (11) und der Bildanzeigevorrichtung (12) wirkverbunden ist, um elektrische Leistung zuzuführen.

## Revendications

1. Système (1) destiné à la réalité augmentée comprenant :
- un casque (50) conçu pour être porté par un utilisateur (200) ;
- un corps de contenant (15) agencé pour loger une unité vidéo (10), ladite unité vidéo (10) comprenant :
- un dispositif destiné à l'acquisition d'images (11) conçu pour acquérir des images (301) d'une scène réelle (300) ;
- un dispositif d'affichage (12) conçu pour afficher au moins lesdites images (301) de ladite scène réelle (300) acquises par ledit dispositif destiné à l'acquisition d'images (11) ;
- un corps de support (40) conçu pour mettre en prise ledit corps de contenant (15) avec ledit casque (50) ;
- une unité de transmission (80) conçue pour transmettre lesdites images (301) acquises par ledit dispositif destiné à l'acquisition d'images (11) à un emplacement distant (250) ;
ledit système (1) étant **caractérisé en ce que** ledit corps de contenant (15) et ledit corps de support (40) sont dotés de premier et second éléments de mise en prise respectifs (31a, 32a, 31b, 32b) conçus pour mettre en prise de manière amovible de façon sélective et en alternance ledit corps de contenant (15) avec ledit corps de support (40) dans une première position de mise en prise prédéfinie, dans laquelle ledit dispositif destiné à l'acquisition d'images (11) est conçu pour acquérir des images (301) de ladite scène réelle (300) avec un premier champ de vision prédéfini (FoV1) et ledit dispositif d'affichage (12) est positionné dans le champ de vision de l'utilisateur, et au moins une seconde position de mise en prise prédéfinie, dans laquelle ledit dispositif destiné à l'acquisition d'images (11) est conçu pour acquérir des images (301) de ladite scène réelle (300) avec un second champ de vision prédéfini (FoV2), et ledit dispositif d'affichage (12) étant positionné à l'extérieur du champ de vision de l'utilisateur **et en ce que** ladite unité de transmission (80) est agencée pour transmettre lesdites images de ladite scène réelle (300) acquises par ledit dispositif destiné à l'acquisition d'images (11), audit emplacement distant également lorsque ledit corps de contenant (15) est positionné dans ladite seconde position de mise en prise prédéfinie.

2. Système destiné à la réalité augmentée, selon la revendication 1, ledit corps de contenant (15) et ledit corps de support (40) comprenant des première et seconde surfaces de mise en prise respectives (16, 46, 17, 47) dotées respectivement desdits premier et second éléments de mise en prise respectifs (31a, 32a, 31b, 32b), lesdites première et seconde surfaces de mise en prise (16, 46, 17, 47) étant agencées pour venir en prise de manière réversible de façon sélective et en alternance l'une avec l'autre, par lesdits premier et second éléments de mise en prise (31a, 32a, 31b, 32b) pour positionner ledit corps de contenant (15) dans ladite première, ou dans ladite seconde, position de mise en prise prédéfinie par rapport audit corps de support (40).

3. Système destinée à la réalité augmentée selon la revendication 2, ladite première surface de mise en prise (16) et ladite seconde surface de mise en prise (17) dudit corps de contenant (15) formant un angle α d'amplitude prédéfinie, ledit angle α étant compris entre -10° et 10°, c'est-à-dire : -10° ≤ α ≤ 10°.

4. Système destiné à la réalité augmentée selon la revendication 1, ledit corps de support (40) comprenant :
- une partie de base (41) agencée pour être mise en prise avec ledit casque (50) ;
- une partie mobile (42) articulée à ladite partie de base (41), ladite partie mobile (42) étant conçue pour tourner autour d'un axe de rotation (142) par rapport à ladite partie de base (41), d'une façon telle que le réglage de l'inclinaison du corps de contenant (15) par rapport à la partie de base et, par conséquent, par rapport à l'utilisateur est permis, lorsque ledit corps de contenant (15) est agencé pour venir en prise avec ledit corps de support (40) dans ladite première position de mise en prise prédéfinie.

5. Système destiné à la réalité augmentée, selon la revendication 2, au moins ledit corps de contenant (15), au niveau desdites première et seconde surfaces de mise en prise respectives (16, 17) étant, en outre, doté de parties de guidage respectives (18a, 18b, 19a, 19b) conçues pour guider le positionnement dudit corps de contenant (15) par rapport audit corps de support (40), jusqu'à venir en prise avec ledit premier, ou second, élément de mise en prise (31a, 32a, 31b, 32b), ladite, ou chaque, partie de guidage (18a, 18b) comprenant une partie évidée prévue au moins dans l'une entre lesdites première et seconde surfaces de mise en prise dudit corps de contenant (15), ladite, ou chaque, partie évidée étant conçue pour loger ladite première, ou ladite seconde, surface de mise en prise (46, 47) dudit corps de support (40).

6. Système destiné à la réalité augmentée, selon l'une quelconque des revendications précédentes, lesdits premier et second éléments de mise en prise (31a, 32a, 31b, 32b) étant conçus pour mettre en prise magnétiquement ledit corps de contenant (15) et ledit corps de support (40) l'un avec l'autre, et au moins lesdits seconds éléments de mise en prise (31b, 32b) dudit corps de contenant (15) et dudit corps de support (40) étant de type magnétique et comprenant un aimant en néodyme respectif, d'une façon telle qu'un auto-centrage desdits seconds éléments de mise en prise (31b, 32b) en raison de la force magnétique élevée et, par conséquent, un positionnement correct dudit corps de contenant (15) par rapport audit corps de support (40) est prévu.

7. Système destiné à la réalité augmentée, selon la revendication 1, lesdits premiers éléments de mise en prise (31a, 32a) dudit corps de contenant (15) et dudit corps de support (40) comprenant, respectivement, un aimant (31a) et au moins une partie constituée d'un matériau paramagnétique (32a), d'une façon telle qu'un mouvement axial entre ledit corps de contenant (15) et ledit corps de support (40) avant de mettre en prise lesdits premiers éléments de mise en prise (31a, 32a) l'un avec l'autre au niveau de ladite première position de mise en prise prédéfinie est permis.

8. Système destiné à la réalité augmentée, selon l'une quelconque des revendications précédentes, lesdites première et seconde surfaces de mise prise (16, 17, 46, 47) étant conçues d'une façon telle que sorte que ledit premier champ de vision prédéfini (FoV1) est sensiblement égal audit second champ de vision prédéfini (FoV2).

9. Système destiné à la réalité augmentée selon l'une quelconque des revendications précédentes, un groupe de serrage (70) étant, en outre, prévu conçu pour mettre en prise ledit ou chaque corps de contenant (15, 25) avec ledit casque (50).

10. Système destiné à la réalité augmentée selon la revendication 9, ledit groupe de serrage (70) comprenant :
- un câble de serrage (5) agencé pour être contraint audit ou à chaque corps de contenant (15, 25) au niveau d'une partie de contrainte respective (35, 45) ;
- un dispositif d'étirage (100) conçu pour passer d'une configuration de repos, dans laquelle ledit dispositif d'étirage (100) n'est pas agencé pour appliquer une force de traction sur ledit câble de serrage (5), à une configuration d'étirage, dans laquelle ledit dispositif d'étirage (100) est agencé pour appliquer une force de traction déterminée sur ledit câble de serrage (5), d'une façon telle que ledit câble de serrage est amené à passer d'une configuration de positionnement, dans laquelle ledit câble de serrage (5) est mou et peut, par conséquent, être positionné autour dudit casque (50), et une configuration de serrage, dans laquelle ledit câble de serrage (5) est soumis à ladite force de traction déterminée moyennant quoi ledit câble de serrage (5) est agencé pour serrer ladite, ou chaque, partie de contrainte (35, 45) à ladite surface externe (56) dudit casque (50) afin de mettre en prise fermement ledit, ou chaque, corps de contenant (15) avec ledit casque (50), au niveau d'une position de mise en prise prédéfinie respective ;
ledit dispositif d'étirage (100) comprenant une partie fixe (101) agencée pour venir en prise avec ledit casque (50) et une partie mobile (102) reliée rotative à ladite partie fixe, ladite partie mobile (102) étant conçue pour tourner autour d'un axe de rotation (120) par rapport à ladite partie fixe (101) dans un premier sens de rotation pour amener ledit câble de serrage (5) à s'enrouler autour d'un arbre d'enroulement (126) d'une façon telle que ladite force de traction est appliquée sur ledit câble de serrage (5), et dans un second sens de rotation, opposé au premier, pour dérouler ledit câble de serrage (5) dudit arbre d'enroulement (126) et pour réduire ladite force de traction, et étant en outre prévus :
- un premier corps de mise en prise (115) possédant une première partie de mise en prise (133) conçue pour venir en prise avec ledit bord (55) dudit casque (50) ;
- des premiers éléments de mise en prise supplémentaires (110) étant prévus conçus pour venir en prise de façon amovible avec ladite partie fixe (101) dudit dispositif d'étirage (100) et ledit premier corps de mise en prise (115), lesdits premiers éléments de mise en prise supplémentaires (110) étant conçus d'une façon telle que la rotation de ladite partie mobile (102) est permise par rapport à ladite partie fixe (101), un deuxième corps de mise en prise (30) étant associé audit premier corps de contenant (15), ledit deuxième corps de mise en prise (30) étant doté d'une première partie de contrainte (35) et d'une deuxième partie de mise en prise (33) conçue pour mettre en prise ledit deuxième corps de mise en prise (30) avec ledit bord (55) dudit casque (50) au niveau de ladite première position de mise en prise prédéfinie (51) ;
- des deuxièmes éléments de mise en prise supplémentaires (130) conçus pour mettre en prise de manière amovible ledit premier corps de contenant (15) et ledit deuxième corps de mise en prise (30) ;
- un troisième corps de mise en prise (40') associé audit second corps de contenant (25), ledit troisième corps de mise en prise (40) étant doté de ladite seconde partie de contrainte (45) et d'une troisième partie de mise en prise (43) conçue pour mettre en prise ledit second corps de contenant (25) avec ledit bord (55) dudit casque (50) au niveau de ladite seconde position (52) ;
- des troisièmes éléments de mise en prise supplémentaires (140) conçus pour mettre en prise de manière amovible ledit second corps de contenant (25) et ledit troisième corps de mise en prise (40).

11. Système destiné à la réalité augmentée selon la revendication 10, ladite ou chaque partie de contrainte (35, 45) étant dotée d'au moins un passage (34, 44) conçu pour passer à travers ladite ou chaque partie de contrainte (35, 45) entre un premier et un second côté, ledit câble de serrage (5) étant agencé pour être contraint à ladite ou à chaque partie de contrainte au niveau dudit ou de chaque passage (34, 44).

12. Système destiné à la réalité augmentée, selon la revendication 10 ou 11, ledit dispositif d'étirage (100) étant doté d'une partie d'actionnement (105) conçue pour amener ladite partie mobile (102) à tourner par rapport à ladite partie fixe (101) dans ledit premier ou second sens de rotation.

13. Système destiné à la réalité augmentée, selon la revendication 11, au moins l'une parmi lesdites première, deuxième et troisième parties de mise en prise (133, 33, 43) comprenant au moins une partie d'extrémité (36) conçue pour passer de manière élastique d'une configuration de fermeture, à une configuration d'ouverture dans laquelle ladite partie d'extrémité (36) est agencée pour former une ouverture d'introduction (37) à travers laquelle ledit bord (55) est agencé pour être introduit au niveau d'une partie de mise en prise façonnée (38), et ensuite pour revenir dans ladite configuration de fermeture, dans laquelle ladite partie d'extrémité (36) est agencée pour fermer, au moins partiellement, ladite ouverture d'introduction (37), piégeant ledit bord (55) dans ladite partie de mise en prise façonnée (38), et ladite partie de mise en prise façonnée (38) étant une contre-dépouille.

14. Système destiné à la réalité augmentée selon l'une quelconque des revendications précédentes, lesdits premier et second éléments de mise en prise (31a, 32a, 31b, 32b) étant conçus pour se déplacer de ladite première position de mise en prise prédéfinie à ladite seconde position de mise en prise prédéfinie, ou vice versa, passant par une position de mise en prise intermédiaire, dans laquelle ledit corps de contenant (15) est mécaniquement séparé dudit corps de support (40).

15. Système destiné à la réalité augmentée, selon l'une quelconque des revendications précédentes, étant, en outre, prévu un second corps de contenant (25) conçu pour loger une unité d'alimentation (150) reliée fonctionnellement à au moins un entre ledit dispositif destiné à l'acquisition d'images (11) et ledit dispositif d'affichage d'images (12) pour fournir de l'énergie électrique.
